(19) Europäisches Patentamt
European Patent Office
Office européen des brevets

(11) **EP 2 128 726 B1**

(12) **EUROPÄISCHE PATENTSCHRIFT**

(45) Veröffentlichungstag und Bekanntmachung des Hinweises auf die Patenterteilung:
**27.07.2011  Patentblatt 2011/30**

(51) Int Cl.:
*G05B 19/042* (2006.01)          *G05B 17/00* (2006.01)
*G06F 17/50* (2006.01)

(21) Anmeldenummer: **08009808.0**

(22) Anmeldetag: **29.05.2008**

(54) **Verfahren und Simulator zur Echtzeitberechnung der Zustandsgrössen eines Prozessmodells**

Method and simulator for real-time calculation of the state variables of a process model

Procédé et simulateur destinés au calcul en temps réel des variables d'état d'un modèle de processus

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(43) Veröffentlichungstag der Anmeldung:
**02.12.2009  Patentblatt 2009/49**

(73) Patentinhaber: **dspace digital signal processing and control engineering GmbH**
**33102 Paderborn (DE)**

(72) Erfinder: **Frochte, Jörg Dr.**
**33106 Paderborn (DE)**

(74) Vertreter: **Gesthuysen, von Rohr & Eggert**
**Patentanwälte**
**Postfach 10 13 54**
**45013 Essen (DE)**

(56) Entgegenhaltungen:
**US-A1- 2002 177 983**

• **HUBERTUS TUMMESCHEIT: "Hardware-in-the-Loop Simulation & Analysis"[Online] November 2003 (2003-11), Seiten 1-16, XP002497862 Gefunden im Internet: URL:https: //www.cds.caltech.edu/help/uploa ds/wiki/files/ 12/HIL-DGC100.pdf> [gefunden am 2008-09-30]**
• **ANTON SCHIELA; HANS OLSSON: "Mixed-mode Integration for Real-time Simulation" MODELICA WORKSHOP 2000 PROCEEDINGS, 24. Oktober 2000 (2000-10-24), Seite 69-75, XP002497863 Lund, Sweden**
• **ZHAO Z M ET AL: "A flexible virtual system for real time simulation and evaluation of motor drives" POWER ELECTRONICS AND DRIVE SYSTEMS, 1999. PEDS '99. PROCEEDINGS OF TH E IEEE 1999 INTERNATIONAL CONFERENCE ON HONG KONG 27-29 JULY 1999, PISCATAWAY, NJ, USA,IEEE, US, Bd. 1, 27. Juli 1999 (1999-07-27), Seiten 361-365, XP010352124 ISBN: 978-0-7803-5769-3**
• **JUNG D W ET AL: "Step-Wise combined implicit-explicit finite-element simulation of autobody stamping processes" JOURNAL OF MATERIALS PROCESSING TECHNOLOGY, NL, Bd. 83, 1. Januar 1998 (1998-01-01), Seiten 245-260, XP002265281 ISSN: 0924-0136**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Echtzeitberechnung der Zustandsgrößen eines Prozeßmodells auf einem Prozeßrechner mit einer ersten Recheneinheit und einer Prozeßschnittstelle, wobei der Prozeßrechner so eingerichtet ist, daß über die Prozeßschnittstelle wenigstens eine Zustandsgröße eines physikalischen Prozesses von dem Prozeßrechner erfaßt und/oder wenigstens eine Ausgangsgröße zur Beeinflussung des physikalischen Prozesses von dem Prozeßrechner ausgegeben werden kann, wobei das Prozeßmodell von der ersten Recheneinheit zur Ermittlung der Zustandsgrößen des Prozeßmodells mit einem expliziten Integrationsverfahren berechnet wird. Ferner betrifft die Erfindung ein weiteres derartiges Verfahren und einen Simulator zur Ausführung solcher Verfahren.

Insbesondere aus den Bereichen der Mechatronik und der Prozeßautomatisierung sind die zuvor angegebenen Verfahren zur Echtzeitberechnung der Zustandsgrößen eines Prozeßmodells wie auch Simulatoren, mit denen derartige Verfahren durchgeführt werden, praktisch nicht mehr wegzudenken. Üblicherweise wird der Prozeßrechner bzw. Simulator über seine Prozeßschnittstelle mit einem realen physikalischen Prozeß verbunden, so daß Zustandsgrößen des physikalischen Prozesses - durch Messung - von dem Prozeßrechner bzw. dem Simulator erfaßt werden können und der Prozeßrechner bzw. Simulator über die Prozeßschnittstelle auf den realen physikalischen Prozeß durch Ausgabe von Ausgangsgrößen Einfluß nehmen kann.

Es gibt zahlreiche Anwendungsfälle für einen Prozeßrechners bzw. einen Simulator, die beispielsweise danach kategorisiert werden können, welche Art von Prozeßmodell auf dem Prozeßrechner bzw. Simulator ausgeführt wird.

Wenn auf dem Prozeßrechner im wesentlichen Regelungsalgorithmen implementiert sind, handelt es sich bei dem Prozeßrechner meist um ein Steuergerät, wobei das Prozeßmodell Teil des implementierten Regelungsalgorithmus sein kann, wie es beispielsweise bei der Entkopplung von - linearen oder auch nichtlinearen - Mehrgrößensystemen der Fall ist. Ein typischer Anwendungfall ist hier der Reglerentwurf, der - je nach den zur Anwendung kommenden Entwicldungswerkzeugen - beispielsweise im Rahmen des sogenannten Rapid-Control-Prototyping (RCP) durchgeführt wird.

Bei anderen, häufiger auftretenden Anwendungsfällen wird von dem Prozeßrechner als Prozeßmodell das mathematische Abbild eines technischen Prozesses berechnet, wie z. B. das mathematische Modell des Motors oder des Getriebes eines PKW. Dieses Prozeßmodell steht über die Prozeßschnittstelle des Prozeßrechners mit einem "rechten" technisch-physikalischen Prozeß in Verbindung, im Falle des beschriebenen PKW-Anwendungsfalls meist mit einem Steuergerät, dessen Funktionalität zu testen ist; vorliegend könnte es sich um ein Motorsteuergerät handeln. Das Steuergerät wird von den Ausgangsgrößen des Prozeßmodells mit entsprechenden Signalen beaufschlagt (z. B. Motordrehzahl, Stellung der Nockenwelle etc.), und das Steuergerät reagiert darauf mit bestimmten Zustandsgrößen - Zustandsgrößen des physikalischen Prozesses - die zumindest teilweise über die Prozeßschnittstelle auf den Prozeßrechner rückwirken. In diesem Anwendungsfall wird der Prozeßrechner häufig als Simulator bezeichnet. Der Simulator kann auch als offener Regelkreis "open-loop" arbeiten, indem keine Zustandsgrößen des physikalischen Prozesses auf ihn rückwirken.

Anhand der vorstehenden Beispiele ist ersichtlich, daß die Begriffe "Prozeßrechner" und "Simulator" beide gleichermaßen digitale Abtast- und Rechenwerkzeuge bezeichnen, mit denen ein Prozeßmodell berechenbar ist. Wenn im folgenden entweder von "Prozeßrechner" oder "Simulator" die Rede ist, dann erfolgt das in Einblick auf den üblichen Sprachgebrauch für bestimmte Anwendungen, funktionell jedoch sind die Begriffe im folgenden in der Regel austauschbar. Wenn das Testobjekt - hier der reale Prozeß - gleichsam einen Wirkkreis mit dem Simulator bildet, wird oft von einem "in-the-Loop"-Simulator gesprochen, im vorliegenden Beispiel von einem Hardware-in-the-Loop-Simulator.

Die auf dem Prozeßrechner berechneten Prozeßmodelle sind mathematische Beschreibungen physikalisch-technischer Systeme durch Differentialgleichungen. Die Differentialgleichungen sind Gleichungen in den zeitabhängigen Zustandsgrößen des Prozeßmodells, wobei die Differenzialgleichungen über gemeinsame Zustandsgrößen miteinander gekoppelt sind. Zur numerischen Lösung des Prozeßmodells, also zur Ermittlung der Zustandsgrößen aus den Differentialgleichungen, werden an sich bekannte numerische Integrationsverfahren verwendet. Diese Integrationsverfahren sind nach verschiedenen Gesichtspunkten einteilbar und können beispielsweise in explizite und implizite Verfahren sowie Ein- und Mehrschrittverfahren unterteilt werden.

Die Integrationsverfahren haben zunächst gemeinsam, daß die Zustandsgrößen $\underline{x}_M$ eines Prozeßmodells nur in bestimmten diskreten Zeitpunkten berechnet werden, die Zustandsgrößen im Ergebnis also nicht als zeitkontinuierliche Funktion $\underline{x}_M(t)$ vorliegen, sondern nur in diskreten zeitlichen Stützstellen $\underline{x}_M(t_k)$. Die mit einem Integrationsverfahren in einer Stützstelle ermittelten Werte für die Zustandsgrößen $\underline{x}_M$ des Prozeßmodells sind verfahrensbedingt immer mit einem Fehler behaftet und stellen daher nur einen Näherungswert des tatsächlichen Wertes der Zustandsgrößen $\underline{x}_M$ dar. Bei jeder numerischen Integration besteht die Aufgabe darin, einen zukünftigen Wert zum Zeitpunkt $t_{k+1}$ der Zustandsgrößen $\underline{x}_M$ - also die Zustandsgrößen $\underline{x}_{M\,K+1}$ - zu ermitteln, wobei im allgemeinen Fall gilt:

$$\underline{x}_{M,k+1} = \underline{x}_{M,k} + \underline{f}\left(\dot{x}_{M,\,k+1}, x_{M,\,k}, \dot{x}_{M,\,k}, \underline{x}_{M,\,k-1}, \ldots\right) \qquad\qquad (1)$$

Ein explizites Integrationsverfahren liegt dann vor, wenn der neu zu berechnende Wert der Zustandsgrößen $\underline{x}_M$ im Zeitpunkt $t_{k+1}$ - also $\underline{X}_{M,\,k+1}$ - ausschließlich aufgrund von zeitlich zurückliegenden Werten $\underline{x}_{M,\,k}$ und $\dot{\underline{x}}_{M,\,k}$ usw. berechnet wird, also die Funktion $\underline{f}$ explizit durch diese Wert ausgedrückt werden kann. Die Berechnung der Zustandsgrößen $\underline{x}_{M,\,e}$ durch ein explizites Integrationsverfahren zu diskreten fortschreitenden Zeitpunkten erfolgt also rekursiv in Abhängigkeit von vergangenen Werten der Zustandsgrößen und deren Ableitung oder Ableitungen. Je nachdem, wie viele Zeitschritte zurückliegende Werte der Zustandsgrößen benötigt werden, wird von einem Ein- oder auch einem Mehrschrittverfahren gesprochen; dies gilt gleichermaßen für implizite Tategrationsverfahren.

Ein implizites Integrationsverfahren liegt dann vor, wenn - wie in Gleichung 1 dargestellt - die Funktion $\underline{f}$ selbst von den aktuell zu ermittelnden Zustandsgrößen- bzw. deren Ableitung oder Ableitungen - abhängt. Bekanntlich können derartige Abhängigkeiten numerisch nur iterativ gelöst werden, was folglich bedeutet, daß innerhalb des numerischen Integrationsschritts eine Iterationsschleife ablaufen muß, was bei expliziten Integrationsverfahren nicht notwendig ist. Die Iteration zur Ermittlung der mit dem impliziten Verfahren berechneten Zustandsgrößen $\underline{x}_{M,i}$ wird üblicherweise dann abgebrochen, wenn aufeinanderfolgend berechnete Näherungswerte sich um weniger als einen festgesetzten maximalen Wert voneinander unterscheiden, bis also eine gewisse Fehlergrenze unterschritten worden ist.

Explizite Integrationsverfahren haben den Vorteil, daß die Anzahl der erforderlichen Rechenschritte um eine aktuelle Zustandsgröße $\underline{x}_{M,\,e}$ zu berechnen, bekannt und nahezu gleichbleibend ist, so daß sichergestellt werden kann, daß aktuelle Werte der Zustandsgrößen $\underline{x}_M$ zu bestimmten absehbaren Zeitpunkten vorliegen. Dies ist für alle Echtzeit-Anwendungen sehr wichtig, da andernfalls zeitdiskrete Abtastsysteme nicht realisierbar wären. Nachteilig ist bei expliziten Verfahren jedoch, daß die Genauigkeit der Berechnungen mit Unsicherheiten behaftet ist und insbesondere bei steifen Systemen - also Systemen mit sich stark unterscheidenden Eigenwerten - nur dann akzeptable Berechnungsergebnisse erzielt werden können, wenn die Schrittweite des expliziten numerischen Integrationsverfahrens hinreichend klein gewählt wird. Bei steifen Systemen muß die Schrittweite des expliziten Integrationsverfahrens unter Umständen derart verkleinert werden, daß eine Berechnung unter Echtzeitbedingung nicht mehr möglich ist.

Die impliziten Integrationsverfahren verzügen dagegen über den Vorteil, daß durch Vorgabe einer Fehlergrenze die Genauigkeit der Berechnung sehr exakt vorgebbar ist, jedoch ist dies korrespondierend mit dem Nachteil verbunden, daß nicht bekannt ist, wie viele Iterationen innerhalb eines Tntegrationsschritts notwendig sind, um ein Ergebnis mit der geforderten Genauigkeit zu berechnen. Implizite Integrationsverfahren sind deshalb insbesondere bei steifen Systemen für die in Rede stehenden Echtzeitanwendungen nur mit Einschränkungen geeignet.

Aufs der Präsentation "Hardware-in-the-Loop Simulation & Analysis" von H. Tummescheit, November 2003, gemäß XP002497862. und aus dem Aufsatz "Mixed-mode Integration for Real-Time Simulation" von A. Schiela und H. Olsson, Modelica Workshop 2000 Proceedings, 24. Oktober 2000, Seiten 69-75, ist bekannt, ein Prozessmodell zu zerlegen, beispielsweise in einen "schnellen" Teil - mit nah beieinander liegenden Eigenwerten - und in einen "langsame" Teil - mit entfernten Eigenwerten. Der eine Teil des Prozessmodells wird mit einem expliziten Integrationsverfahren berechnet und der andere Teil des Prozessmodells wird mit einem impliziten Integrationsverfahren berechnet, wobei sich die aus den verschiedenen Berechnungen resultierenden Teilmengen der Zustandsvariablen in Summe zu den Zustandsgrößen des Prozessmodells ergänzen. Problematisch ist bei dieser Vorgehensweise, daß eine genaue Untersuchung des Prozessmodells vor laufzeit der Simulation erfolgen muss, um eine geeignete Zerlegung des Prozessmodells aufzufinden

Aufgabe der vorliegenden Erfindung ist es daher, die aufgezeigten Nachteile bei den bekannten Verfahren zur Echtzeitberechnung der Zustandsgrößen eines Prozeßmodells - zumindest teilweise - zu vermeiden, insbesondere die Echtzeitfähigkeit der Berechnung bei weitestgehender Gewährleistung der numerischen Genauigkeit und Stabilität der Berechnung sicherzustellen.

Das erfindungsgemäße Verfahren zur Echtzeitberechnung der Zustandsgrößen eines Prozeßmodells auf einen Prozeßrechner, der mit einem realen physikalischen Prozeß in Verbindung steht, ist nach einer ersten Lehre der Erfindung zunächst und im wesentlichen dadurch gekennzeichnet, daß wenigstens eine zweite Recheneinheit bereitgestellt wird, mit der wenigstens zweiten Recheneinheit das Prozeßmodell mit einem impliziten Integrationsverfahren im wesentlichen simultan zu der Berechnung des Prozeßmodells mit der ersten Recheneinheit ausgeführt wird, die mit der zweiten Recheneinheit und dem impliziten Verfahren berechneten Zustandsgrößen des Prozeßmodells zur Korrektur der auf der ersten Recheneinheit durchgeführten Berechnung des Prozeßmodells herangezogen werden, indem zur Berechnung der aktuellen Zustandsgrößen $x_{M,c}$, des Prozessmodells mit der ersten Recheneinheit die vergangenen von der zweiten Recheneinheit berechneten Zustandsgrößen $x_{M,i}$ des Prozessmodells - soweit vorhanden - verwendet werden, und die derart mit dem expliziten Integrationsverfahren ermittelten Zustandsgrößen des Prozessmodells als Zustandsgrößen des Prozeßmodells verwendet werden, so daß das explizite Intergrationsverfahren - soweit wie möglich - mit den genaueren Daten des impliziten Integrationsverfahrens getrieben wird.

Das erfindungsgemäße Verfahren macht sich den Umstand zunutze, daß Prozeßrechner zunehmend über eine Hardwareausstattung mit mehreren Recheneinheiten verfügen, sei es in Form von Multiprozessor-Systemen, die also mehrere, als Bauteil unterscheidbare Prozessoren aufweisen, oder sei es in Form von Mehrkernprozessoren (Multicore), in denen ein Prozessor mehrere weitestgehend unabhängig voneinander arbeitende Kerne enthält, die tatsächlich gleichzeitig unterschiedliche Vorgänge bearbeiten können und diese Vorgänge nicht lediglich sequentiell hintereinander - und damit ohne Zeitgewinn - in Form von einzelnen Threads bearbeiten.

Wenn davon die Rede ist, daß mit der zweiten Recheneinheit das Prozeßmodell mit einem impliziten Integrationsverfahren "im wesentlichen," simultan zu der Berechnung des Prozeßmodells mit der ersten Recheneinheit ausgeführt wird, dann ist damit gemeint, daß die Verfahren so gleichzeitig zueinander ausgeführt werden, wie es die hardwaremäßigen und verfahrensgemäßen Unterschiede gestatten. Beispielsweise kann es sein, daß das explizite und das implizite Integrationsverfahren Berechnungen der Zustandsgrößen $x_{M,c}$ bzw. $x_{M,i}$ zu unterschiedlichen - also leicht zueinander versetzten - Berechnungszeitpunkten ausführen, die Berechnungen des Prozeßmodells gleichwohl aber im Sinne der Erfindung als "im wesentlichen" simultan durchgeführt betrachtet werden können, da sie sich beide auf die gleiche physikalische Zeit beziehen und eine gemeinsame physikalische Zeitbasis haben.

Dadurch, daß als Zustandsgrößen $x_M$ des Prozeßmodells die mit dem expliziten Integrationsverfahren ermittelten Zustandsgrößen $x_{M,\,e}$ verwendet werden, wird zunächst sichergestellt, daß die Echtzeitbedingungen bei der Berechnung der Zustandsgrößen des Prozeßmodells eingehalten werden können. Durch die Korrektur der mit dem expliziten Integrationsverfahren ermittelten Zustandsgrößen $x_{M,\,e}$ durch die mit dem impliziten Integrationsverfahren ermittelten Zustandsgrößen $x_{M,i}$ kann zusätzlich sichergestellt werden, daß sich Fehler des expliziten Integrationsverfahrens nicht beliebig akkumulieren. Dabei kommt es nicht darauf an, daß eine derartige Korrektur in jedem Berechnungsschritt des expliziten Verfahrens vorgenommen wird, wenngleich es vorteilhaft ist eine solche Korrektur so oft wie möglich vorzunehmen.

Erfindungsgemäß werden zur Berechnung der aktuellen Zustandsgrößen $x_{M,e}$ mit der ersten Recheneinheit die vergangenen von der zweiten Recheneinheit berechneten Zustandsgrößen $x_{M,i}$ soweit vorhanden - verwendet. Das explizite Integrationsverfahren wird hier also - soweit wie möglich - mit den genaueren Daten des impliziten Integrationsverfahrens getrieben. Wenn die mit dem impliziten Integrationsverfahren berechneten Zustandsgrößen $x_{M,i}$ nicht vollständig vorliegen, weil beispielsweise das implizite Integrationsverfahren nicht rechtzeitig terminieren konnte, müssen die fehlenden Zustandsinformationen von dem expliziten Integrationsverfahren bezogen werden.

Nach einer weiteren unabhängigen Lehre der Erfindung ist die eingangs hergeleitete und aufgezeigte Aufgabe auch dadurch gelöst, daß wenigstens eine zweite Recheneinheit bereitgestellt wird, mit der wenigstens zweiten Recheneinheit das Prozeßmodell mit einem impliziten Integrationsverfahren im wesentlichen simultan zu der Berechnung des Prozeßmodells mit der ersten Recheneinheit berechnet wird, daß die mit der zweiten Recheneinheit und dem impliziten Verfahren berechneten Zustandsgrößen des Prozessmodells als Zustandsgrößen des Prozessmodells verwendet werden, sofern die mit der zweiten Recheneinheit und dem impliziten Verfahren berechneten Zustandsgrößen des Prozessmodells in Echtzeit vorliegen und andernfalls die mit dem expliziten Integrationsverfahren ermittelten Zustandsgrößen des Prozessmodells als Zustandsgrößen des Prozeßmodells verwendet werden.

Bei diesem erfindungsgemäßen Verfahren dient das auf der ersten Recheneinheit betriebene explizite Integrationsverfahren als Rückfallposition zur Berechnung des Prozeßmodells, nämlich in dem Fall, wenn das implizite Integrationsverfahren nicht rechtzeitig terminiert, also in Echtzeit nicht die gewünschten Ergebnisse liefern kann. Für den Fall, daß das implizite Integrationsverfahren auf der zweiten Recheneinheit gegen die Echtzeitbedingung verstößt, werden die alternativen Rechenergebnisse des expliziten Integrationsverfahrens auf der ersten Recheneinheit herangezogen. Selbstverständlich ist es möglich, daß das explizite Integrationsverfahren auf der ersten Recheneinheit mit den Zustandsgrößen $x_{M,i}$ des impliziten Integrationsverfahrens gespeist wird, so daß eine gute Genauigkeit auch des expliziten Integrationsverfahrens gewährleistet werden kann.

Bei einer vorteilhaften Ausgestaltung des erfindungsgemäßen Verfahrens arbeitet das auf der zweiten Recheneinheit implementierte implizite Integrationsverfahren - zumindest teilweise - mit einer größeren Abtastschrittweite als das auf der ersten Recheneinheit implementierte explizite Integrationsverfahren, wobei die Abtastschrittweite des impliziten Integrationsverfahrens besonders bevorzugt variabel ist, nämlich in Abhängigkeit von den Zustandsgrößen $x_M$ bzw. von der zeitlichen Veränderung dieser Zustandsgrößen angepaßt wird. Bei solchen Anwendungsfällen, bei denen die Zustandsgrößen $x_M$ des Prozeßmodells in einem festen Zeitraster, also bei konstanter Abtastrate zur Verfügung stehen müssen, lassen sich die bei einer variablen Rechenschrittweite zur Verfügung gestellten Zustandsgrößen $x_{M,i}$ des impliziten Integrationsverfahrens dadurch synchronisieren, daß auf der zweiten Recheneinheit zwischen zwei berechneten Abtastzeitpunkten liegende Zustandsgrößen durch Interpolation berechnet werden, insbesondere durch eine polynomiale Approximationsfunktion des Prozeßmodells oder von Teilen des Prozeßmodells, insbesondere durch ein Dense-Output-Verfahren. Wenn die Abtastscbrittweite des impliziten Integrationsverfahren nicht zu stark von der Abtastschrittweite des expliziten Integrationsverfahrens abweicht, führten bereits einfache - also lineare - Interpolationen zu einem brauchbaren Ergebnis bei der Ermittlung der Zustandsgrößen des Prozeßmodells zwischen zwei Berechnungsschritten.

Bei größeren Abweichungen oder einer höheren Anforderung an die Genauigkeit des impliziten Verfahrens bietet sich zwischen den Abtastzeitpunkten eine polynomiale Approximation des Prozeßmodells an. Durch Verwendung bekannter Dense-Output-Verfahren ist es möglich, mit hoher Genauigkeit praktisch zu beliebigen zwischen zwei Abtastzeitpunkten liegenden Zeitpunkten die gesuchten Zustandsgrößen des Prozeßmodells zu berechnen.

Eine besondere Schwierigkeit bei der Verwendung impliziter Integrationsverfahren besteht darin, daß zur Berechnung der zukünftigen Zustandsgrößen - also der Zustandsgrößen im Zeitpunkt $t_{k+1}$ - auch die in diesem Zeitpunkt anstehenden Zustandsgrößen $\underline{x}_p$ des physikalischen Prozesses benötigt werden, diese aber natürlich nicht bekannt sind, da der Zeitpunkt $t_{k+1}$ in der Zukunft liegt. Erfindungsgemäß ist in diesem Fall vorgesehen, daß auf der zweiten Recheneinheit eine zur Berechnung der zukünftigen Zustandsgrößen $\underline{x}_{M,i}$ des Prozeßmodells benötigte - zukünftige - Zustandsgröße $\underline{x}_p$ des physikalischen Prozesses durch Extrapolation aus den vergangenen Zustandsgrößen des physikalischen Prozesses gewonnen wird.

Für den Fall, daß sowohl das explizite Integrationsverfahren auf der ersten Recheneinheit als auch das implizite Integrationsverfahren auf der zweiten Recheneinheit verspätet terminieren, wird nach einer weiteren vorteilhaften Ausgestaltung der Erfindung vorgesehen, daß zur Berechnung der Zustandsgrößen $\underline{x}_M$ des Prozeßmodells diese Zustandsgrößen durch Extrapolation aus den vorherigen Werten der ermittelten Zustandsgrößen $\underline{x}_M$ des Prozeßmodells berechnet werden. Dadurch ist sichergestellt, daß bei dem erfindungsgemäßen Verfahren immer Zustandsgrößen zu den erforderlichen Abtastzeitpunkten zur Verfügung stehen bzw. zur Verfügung gestellt werden können.

Gemäß einer weiteren vorteilhaften Ausgestaltung der Erfindung wird das Prozeßmodell zur Verarbeitung mit dem impliziten Integrationsverfahren auf der zweiten Recheneinheit und auf wenigstens einer weiteren dritten Recheneinheit parallelisiert und werden parallelisiert auf der zweiten und wenigstens zusätzlichen dritten Recheneinheit insgesamt die Zustandsgrößen $\underline{x}_{M,i}$ des Prozeßmodells berechnet. Die Aufgabe der Lösung eines gekoppelten Gleichungssystems, wie es beispielsweise bei impliziten Integrationsverfahren anfällt, läßt sich vergleichsweise gut parallelisieren, wobei im Stand der Technik Verfahren bekannt sind, diese Parallelisierung automatisch durchzuführen. Durch die Parallelisierung ergibt sich die Möglichkeit, das impliziten Integrationsverfahren, das im Zweifelsfall zeitlich erheblich aufwendiger ist als das simultan bearbeitete explizite Integrationsverfahren, mit einer sehr hohen Genauigkeit zu betreiben.

Die eingangs hergeleitete und aufgezeigte Aufgabe wird darüber hinaus gelöst durch einen Simulator, insbesondere einen in-the-Loop-Simulator, zur Echtzeitberechnung der Zustandsgrößen eines Prozeßmodells, mit einer ersten Recheneinheit, wenigstens einer zweiten Recheneinheit und einer Prozeßschnittstelle, wobei über die Prozeßschnittstelle wenigstens eine Zustandsgröße eines physikalischen Prozesses von dem Simulator erfaßbar ist und wenigstens eine Ausgangsgröße zur Beeinflussung des physikalischen Prozesses von dem Simulator ausgebbar ist, indem der Simulator insgesamt so eingerichtet ist, daß mit ihm eines der zuvor beschriebenen Verfahren ausgeführt werden kann.

Im einzelnen gibt es nun verschiedene Möglichkeiten, die erfindungsgemäßen Verfahren und den erfindungsgemäßen Simulator auszugestalten und weiterzubilden. Dazu wird verwiesen auf die den Patentansprüchen 1 und 3 nachgeordneten Patentansprüche und auf die Beschreibung bevorzugter Ausführungsbeispiele in Verbindung mit der Zeichnung. In der Zeichnung zeigen

Fig. 1    einen mit einem physikalischen Prozeß gekoppelten Prozeßrech- ner sowie einen damit korrespondierenden Simulator,

Fig. 2    eine beispielhafte, schematische Übersicht über mögliche Bear- beitungszeiten für das explizite Integrationsverfahren und das implizite Integrationsverfahren auf einer ersten Recheneinheit und auf einer zweiten Recheneinheit sowie die Verwendung der berechneten Zustandsgrößen,

Fig. 3    eine weitere beispielhafte, schematische Übersicht über die Be- arbeitungszeiten für das explizite Integrationsverfahren und das implizite Integrationsverfahren auf einer ersten Recheneinheit und auf einer zweiten Recheneinheit sowie eine alternative Ver- wendung der berechneten Zustandsgrößen und

Fig. 4    eine schematische Darstellung der Berechnung zukünftiger Zu- standsgrößen des physikalischen Prozesses durch Extrapolation.

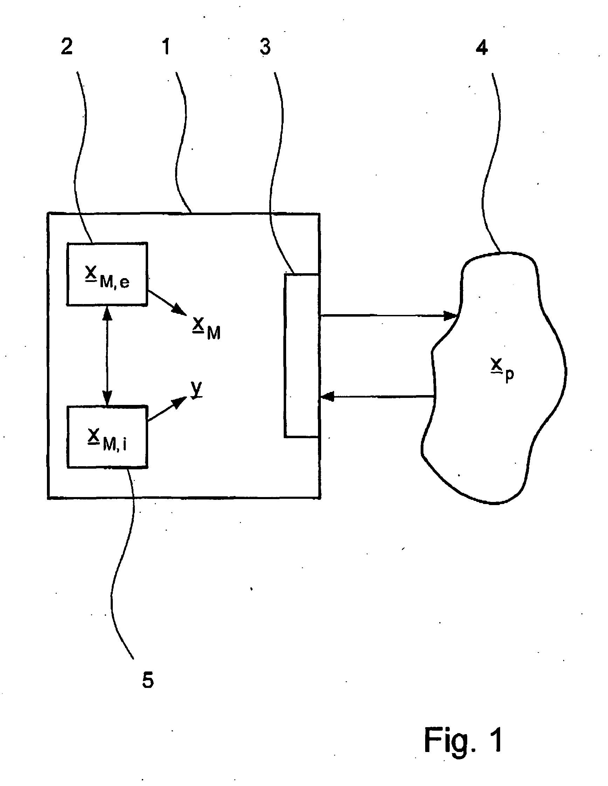

Fig. 1 zeigt in einer schematischen Darstellung einen Prozeßrechner 1 bzw. einen Simulator 1 mit einer ersten Recheneinheit 2 und einer Prozeßschnittstelle 3. Weitere - auch notwendige - Details des Prozeßrechners 1, wie z. B. ein Speicher und ein die erste Recheneinheit 2 mit dem Speicher verbindenden Datenbus, sind hier nicht dargestellt, sind zum Verständnis der Erfindung vorliegend aber auch nicht wichtig.

Der Prozeßrechner 1 ist so eingerichtet, daß über die Prozeßschnittstelle 3 wenigstens eine Zustandsgröße

$x_p$ eines physikalischen Prozesses 4 von dem Prozeßrechner erfaßt und wenigstens eine Ausgangsgröße y zur Beeinflussung des physikalischen Prozesses 4 von dem Prozeßrechner 1 ausgegeben werden kann, wobei das Prozeßmodell von der ersten Recheneinheit 2 zur Ermittlung der Zustandsgrößen $\underline{x}_{M, e}$ mit einem expliziten Integrationsverfahren berechnet wird.

Wie eingangs ausführlich dargestellt worden ist, ist die alleinige Verwendung eines expliziten Integrationsverfahrens, insbesondere bei der Berechnung von Zustandsgrößen eines steifen Prozeßmodells, unter Echtzeitbedingungen problematisch, da die Schrittweite zur Gewährleistung einer bestimmten Genauigkeit so klein gewählt werden muß, daß die Berechnungen unter Umständen nicht mehr unter Echtzeitbedingungen durchführbar sind.

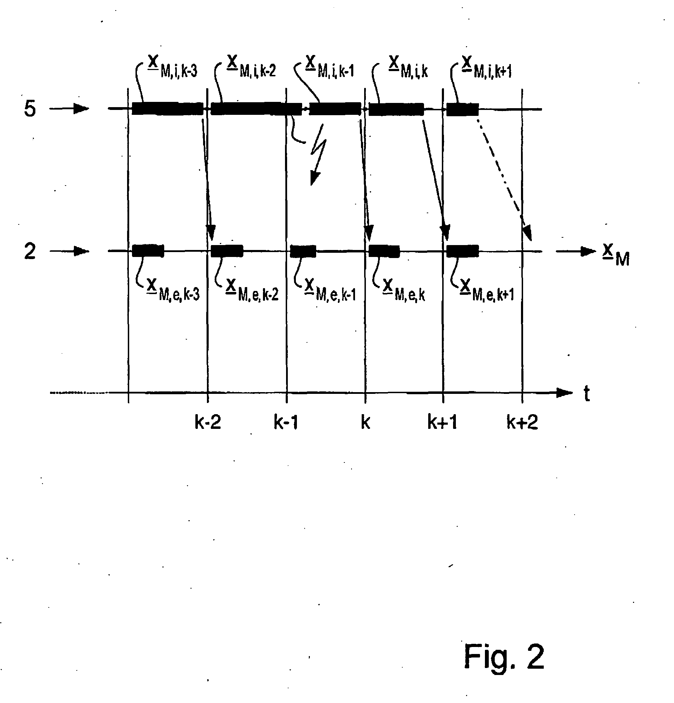

Ein erstes diese Problematik lösendes und in Fig. 2 dargestelltes Verfahren zeichnet sich dadurch aus, daß eine zweite Recheneinheit 5 bereitgestellt wird, mit der zweiten Recheneinheit 5 das Prozeßmodell mit einem impliziten Integrationsverfahren im wesentlichen simultan zu der Berechnung des Prozeßmodells mit der ersten Recheneinheit 2 ausgeführt wird, die mit der zweiten Recheneinheit 5 und dem impliziten Verfahren berechneten Zustandsgrößen $\underline{x}_{M, i}$ des Prozeßmodells zur Korrektur der auf der ersten Recheneinheit 2 durchgeführten Berechnung des Prozeßmodells herangezogen werden und die derart mit dem expliziten Integrationsverfahren ermittelten Zustandsgrößen $\underline{x}_{M,e}$ als Zustandsgrößen $\underline{x}_M$ des Prozeßmodells verwendet werden.

Bei dem in Fig. 1 dargestellten Prozeßrechner handelt es sich bei der ersten Recheneinheit 2 und der zweiten Recheneinheit 5 um zwei separate Kerne eines Multicore-Prozessors; bei anderen, hier nicht dargestellten Ausführungsbeispielen kann es sich bei der ersten Recheneinheit 2 und der zweiten Recheneinheit 5 auch um zwei separate Prozessoren in einem Multi-ProzessorSystem handeln. Die Recheneinheit 2 und die Recheneinheit 5 greifen auf einen gemeinsamen Speicher zu, über den auch Daten wie z.B. die berechneten Zustandsgrößen austauschbar sind. Dies ist in Fig. 1 nicht im einzelnen dargestellt.

Bei dem in Fig. 1 dargestellten Ausführungsbeispiel ist die Korrektur der mit dem expliziten Integrationsverfahren ermittelten Zustandsgrößen $\underline{x}_{M,e}$ dadurch realisiert, daß zur Berechnung der aktuellen Zustandsgrößen $\underline{x}_{M, e}$ mit der ersten Recheneinheit 2 - soweit vorhanden - die vergangenen von der zweiten Recheneinheit 5 berechneten Zustandsgrößen $\underline{x}_{M, i}$ verwendet werden. Dieses Verfahren ist in Fig. 2 im Detail dargestellt. Die Zeitachse ist in die vereinfachend als k-2, k-1, k, k+1 und k+2 bezeichneten Integrationszeitschritte unterteilt. Dargestellt sind die korrespondierenden von der ersten Recheneinheit 2 berechneten Zustandsgrößen $\underline{x}_{M, e}$ und die von der zweiten Recheneinheit berechneten Zustandsgrößen $\underline{x}_{M, i}$.

Wie anhand der eingezeichneten Pfeile zu erkennen ist, werden die mit Hilfe des impliziten Integrationsverfahrens berechneten Zustandsgrößen $\underline{x}_{M,i}$ zur Berechnung zukünftiger Zustandsgrößen mit dem expliziten Integrationsverfahren auf der ersten Recheneinheit 2 verwendet. Dies erfolgt nur dann nicht, wenn das auf der zweiten Recheneinheit 5 ausgeführte implizite Integrationsverfahren nicht rechtzeitig terminiert, was in Fig. 2 in dem Zeitintervall zwischen den Zeitpunkten k-2 und k-1 der Fall ist. In diesem Fall verwendet das explizite Integrationsverfahren zur Berechnung des Zustands $\underline{x}_{M,e,k-1}$ die aus dem expliziten Integrationsverfahren hervorgegangenen Zustandsgrößen $\underline{x}_{M,i,k-2}$. Grundsätzlich liefert immer das explizite Integrationsverfahren die Zustandsgrößen $\underline{x}_{M,c}$, die als Zustandsgrößen $\underline{x}_M$ des Prozeßmodells verwendet werden. Dadurch ist die Echtzeitfähigkeit der Berechnung insgesamt mit großer Sicherheit gewährleistet.

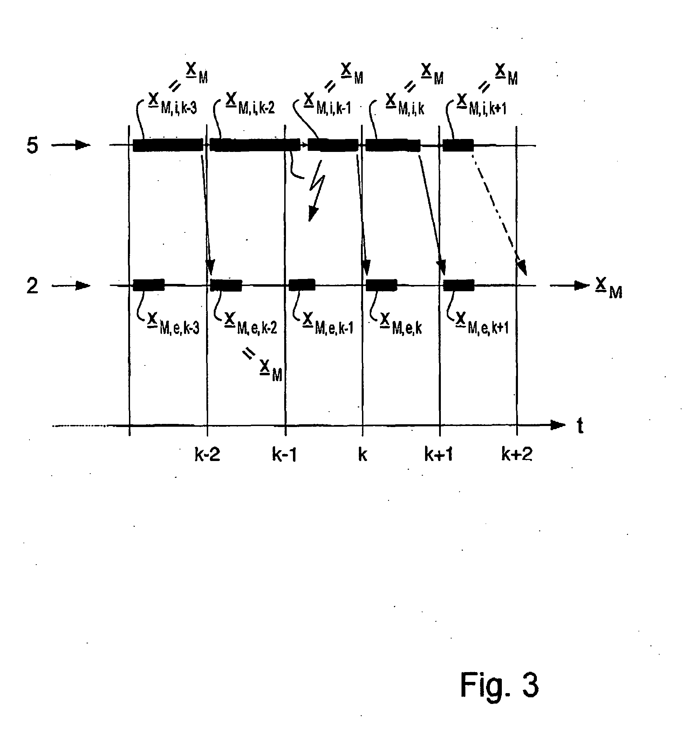

In Fig. 3 ist ein weiteres Verfahren zur Echtzeitberechnung der Zustandsgrößen $\underline{x}_M$ eines Prozeßmodells dargestellt, das zunächst ebenfalls dadurch gekennzeichnet ist, daß eine zweite Recheneinheit 5 bereitgestellt wird: Mit der zweiten Recheneinheit 5 wird das Prozeßmodell mit einem impliziten Integrationsverfahren im wesentlichen simultan zu der Berechnung des Prozeßmodells mit der ersten Recheneinheit 2 berechnet und die mit der zweiten Recheneinheit 5 und dem impliziten Verfahren berechneten Zustandsgrößen $x_{M, i}$ werden als Zustandsgrößen $x_M$ des Prozeßmodells verwendet, sofern die mit der zweiten Recheneinheit 5 und dem impliziten Integrationsverfahren berechneten Zustandsgrößen $x_{M, i}$ in Echtzeit vorliegen. Andernfalls werden die mit dem expliziten Integrationsverfahren ermittelten Zustandsgrößen $\underline{x}_{M, e}$ als Zustandsgrößen $x_M$ des Prozeßmodells verwendet.

Welche der beiden Recheneinheiten letztlich die berechneten Zustandsdaten für das Prozeßmodell zur Verfügung stellt, hängt hier also davon ab, ob das auf der zweiten Recheneinheit 5 betriebene implizite Integrationsverfahren rechtzeitig terminiert oder nicht, In Fig. 3 ist zu erkennen, daß in den Berechnungsintervallen vor den Zeitpunkten k-2, k, k+1 und k+2 jeweils die zweite Recheneinheit die von dem impliziten Integrationsverfahren berechneten Zustandsgrößen $\underline{x}_{M, i}$ als Zustandsgrößen $\underline{x}_M$ des Prozeßmodells bereitstellt und nur in dem Zeitintervall vor dem Zeitpunkt k-1 von dem expliziten Integrationsverfahren auf der ersten Recheneinheit die ermittelten Zustandsgrößen $\underline{x}_{M, e}$ als Zustandsgrößen $\underline{x}_M$ des Prozeßmodells verwendet werden.

In den in den Fig. 2 und 3 dargestellten Ausführungsbeispielen ist ferner zu erkennen, daß das explizite Integrationsverfahren auf der ersten Recheneinheit von den mit dem impliziten Integrationsverfahren ermittelten Zustandsgrößen $\underline{x}_{M, i}$ getrieben wird, sofern diese vorhanden sind, also das implizite Integrationsverfahren im vorherigen Berechnungsschritt rechtzeitig terminiert hat.

In den Fig. 2 und 3 ist dargestellt daß das auf der zweiten Recheneinheit implementierte implizite Integrationsverfahren mit der gleichen Berechnungsschrittweite betrieben wird wie das explizite Integrationsverfahren. Bei anderen, hier nicht dargestellten Verfahren wird die Schrittweite des impliziten Integrationsverfahrens größer gewählt als die Schrittweite des expliziten Integrationsverfahrens. Bevorzugt wird die Berechnungsschrittweise variabel gehalten und an die zeitliche Entwicklung der Zustandsgrößen angepaßt, nämlich klein gewählt bei transienten Vorgängen und groß gewählt bei eingeschwungenen Zuständen mit nur geringen Veränderungen der Zustandsgrößen.

Einleitend ist dargestellt worden, daß sich implizite Integrationsverfahren dadurch auszeichnen, daß die Berechnung der Zustandsgrößen des Prozeßmodells in dem nächsten, interessierenden Zeitschritt nicht nur von den Werten der vergangenen Zustandsgrößen abhängen, sondern von den Zustandsgrößen bzw. deren Ableitungen in dem interessierenden Zeitpunkt selbst, weshalb impliziten Integrationsverfahren der iterativen Lösung bedürfen. Von dieser Eigenschaft können jedoch nicht nur die Zustandsgrößen selbst betroffen sein, sondern auch die Zustandsgrößen des verbundenen physikalischen Prozesses. Das bedeutet, daß zur Berechnung der interessierenden zukünftigen Zustandsgrößen $\underline{x}_{M,i,k+1}$ auch die - zukünftigen - Zustandsgrößen $\underline{x}_{P,k+1}$ des physikalischen Prozesses benötigt werden, die naturgemäß nicht vorliegen können.

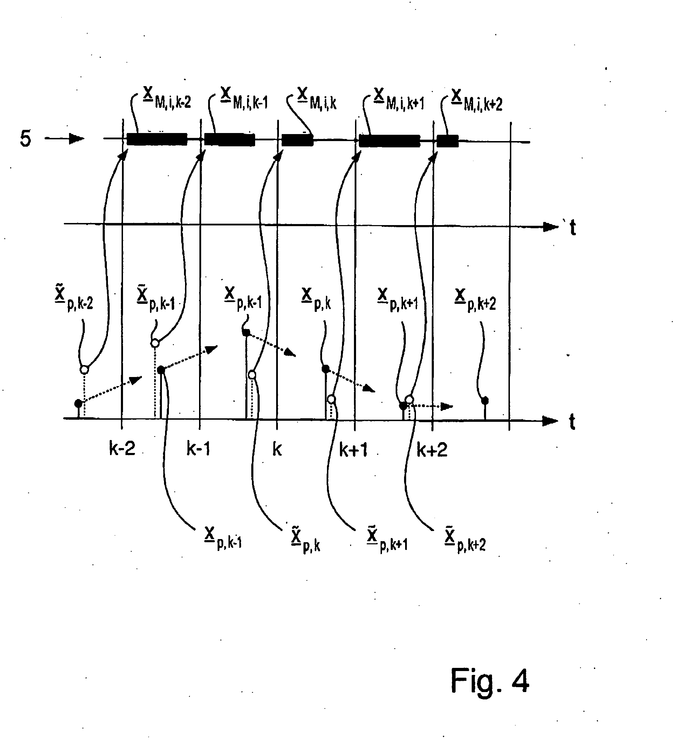

In Fig. 4 ist dargestellt, daß in diesem Fall die zur Berechnung benötigten - zukünftigen - Zustandsgrößen $\underline{x}_{P,k+1}$ des physikalischen Prozesses durch Extrapolation aus den vergangenen Zustandsgrößen $\underline{x}_{P,k}$ des physikalischen Prozesses gewonnen werden; durch die Extrapolation werden jeweils die Schätzwerte $\tilde{x}_{p,k-2}$, $\tilde{x}_{p,k-1}$ $\tilde{x}_{p,k}$, $\tilde{x}_{p,k-1}$, $\tilde{x}_{p,k-2}$ erhalten, die - jeweils durch einen geschwungenen Pfeil angedeutet - zur Berechnung der Zustandsgrößen $\underline{x}_{M,i}$ verwendet werden.

**Patentansprüche**

1.    Verfahren zur Echtzeitberechnung der Zustandsgrößen ($\underline{x}_M$) eines Prozeßmodells auf einem Prozeßrechner (1) mit einer ersten Recheneinheit (2) und einer Prozeßschnittstelle (3), wobei der Prozeßrechner (1) so eingerichtet ist, daß über die Prozeßschnittstelle (3) wenigstens eine Zustandsgröße ($\underline{x}_p$) eines physikalischen Prozesses (4) von dem Prozeßrechner (1) erfaßt und/oder wenigstens eine Ausgangsgröße ($\underline{y}$) zur Beeinflussung des physikalischen Prozesses (4) von dem Prozeßrechner (1) ausgegeben werden kann, wobei das Prozeßmodell von der ersten Recheneinheit (2) zur Ermittlung der Zustandsgrößen ($\underline{x}_{M,e}$) des Prozessmodells mit einem expliziten Integrationsverfahren berechnet wird,
**dadurch gekennzeichnet,**
**daß** wenigstens eine zweite Recheneinheit (5) bereitgestellt wird, mit der wenigstens zweiten Recheneinheit (5) das Prozeßmodell mit einem impliziten Integrationsverfahren im wesentlichen simultan zu der Berechnung des Prozeßmodells mit der ersten Recheneinheit (2) ausgeführt wird, die mit der zweiten Recheneinheit (5) und dem impliziten Verfahren berechneten Zustandsgrößen ($\underline{x}_{M,i}$) des Prozeßmodells zur Korrektur der auf der ersten Recheneinheit (2) durchgeführten Berechnung des Prozeßmodells herangezogen werden, indem zur Berechnung der aktuellen Zustandsgrößen ($\underline{x}_{M,c}$) des Prozessmodells mit der ersten Recheneinheit (2) die vergangenen von der zweiten Recheneinheit (5) berechneten Zustandsgrößen ($\underline{x}_{M,i}$) des Prozessmodells -soweit vorhanden - verwendet werden, und die derart mit dem expliziten Integrationsverfahren ermittelten Zustandsgrößen ($\underline{x}_{M,c}$) des Prozessmodells als Zustandsgrößen ($\underline{x}_M$) des Prozeßmodells verwendet werden, so daß das expliziten Integrationsverfahren - soweit wie möglich - mit den genaueren Daten des impliziten Integrationsverfahrens getrieben wird.

2.    Verfahren zur Echtzeitberechnung der Zustandsgrößen ($\underline{x}_M$) eines Prozeßmodells auf einem Prozeßrechner (1) mit einer ersten Recheneinheit (2) und einer Prozeßschnittstelle (3), wobei der Prozeßrechner (1) so eingerichtet ist, daß über die Prozeßschnittstelle (3) wenigstens eine Zustandsgröße ($\underline{x}_p$) eines physikalischen Prozesses (4) von dem Prozeßrechner (1) erfaßt und/oder wenigstens eine Ausgangsgröße ($\underline{y}$) zur Beeinflussung des physikalischen Prozesses (4) von dem Prozeßrechner (1) ausgegeben werden kann, wobei das Prozeßmodell von der ersten Recheneinheit (2) zur Ermittlung der Zustandsgrößen ($\underline{x}_{M,e}$) des Prozeßmodells mit einem expliziten Integrationsverfahren berechnet wird,
**dadurch gekennzeichnet,**
**daß** wenigstens eine zweite Recheneinheit (5) bereitgestellt wird, mit der wenigstens zweiten Recheneinheit (5) das Prozeßmodell mit einem impliziten Integrationsverfahren im wesentlichen simultan zu der Berechnung des Prozeßmodells mit der ersten Recheneinheit (2) berechnet wird, daß die mit der zweiten Recheneinheit (5) und dem impliziten Verfahren berechneten Zustandsgrößen ($\underline{x}_{M,i}$) des Prozeßmodells als Zustandsgrößen ($\underline{x}_M$) des Prozeßmodells verwendet werden, sofern die mit der zweiten Recheneinheit (5) und dem impliziten Verfahren berechneten Zustandsgrößen ($\underline{x}_{M,i}$) des Prozeßmodells in Echtzeit vorliegen und andernfalls die mit dem expliziten Integrationsverfahren ermittelten Zustandsgrößen ($\underline{x}_{M,e}$) des Prozeßmodells als Zustandsgrößen ($\underline{x}_M$) des Prozeßmodells verwendet werden

3.    Verfahren nach Anspruch 1 oder 2, **dadurch gekennzeichnet, daß** das auf der zweiten Recheneinheit (5) implementierte implizite Integrationsverfahren - zumindest teilweise - mit einer größeren Abtastschrittweite arbeitet als das auf der ersten Recheneinheit (2) implementierte explizite Integrationsverfahren, insbesondere mit einer variablen Abtastschrittweite.

4. Verfahren nach Anspruch 3, **dadurch gekennzeichnet, daß** auf der zweiten Recheneinheit (5) zwischen zwei berechneten Abtastzeitpunkten liegende Zustandsgrößen ($\underline{x}_{M,i}$) des Prozessmodells durch Interpolation berechnet werden, insbesondere durch eine polynomiale Approximationsfunktion des Prozeßmodells oder von Teilen des Prozeßmodells, insbesondere durch ein Dense-Output-Verfahren.

5. Verfahren nach einem der Ansprüche 1 bis 4, **dadurch gekennzeichnet, daß** auf der zweiten Recheneinheit (5) eine zur Berechnung der zukünftigen Zustandsgrößen $\left(\underline{x}_{M,i}^{k+1}\right)$ des Prozeßmodells benötigte - zukünftige - Zustandsgröße $\left(\underline{x}_{P}^{k+1}\right)$ des physikalischen Prozesses durch Extrapolation aus den vergangenen Zustandsgröße des physikalischen Prozesses gewonnen wird.

6. Verfahren nach einem der Ansprüche 1 bis 5, **dadurch gekennzeichnet, daß** bei verspätetem Terminieren der ersten Recheneinheit (2) und der zweiten Recheneinheit (5) zur Berechnung der Zustandsgrößen ($\underline{x}_M$) des Prozeßmodells, die Zustandsgrößen ($\underline{x}_M$) des Prozeßmodells durch Extrapolation aus den vorherigen Werten der ermittelten Zustandsgrößen ($\underline{x}_M$) des Prozeßmodells berechnet werden.

7. Verfahren nach einem der Ansprüche 1 bis 6, **dadurch gekennzeichnet, daß** das Prozeßmodell zur Verarbeitung mit dem impliziten Integrationsverfahren auf der zweiten Recheneinheit (5) und auf wenigstens einer weiteren, dritten Recheneinheit parallelisiert wird und parallelisiert auf der zweiten und wenigstens zusätzlichen dritten Recheneinheit mit dem impliziten Integrationsverfahren insgesamt die Zustandsgrößen ($\underline{x}_{M,i}$) des Prozeßmodells berechnet werden.

8. Simulator, insbesondere in-the-Loop-Simulator, zur Echtzeitberechnung der Zustandsgrößen ($x_M$) eines Prozeßmodells, mit einer ersten Recheneinheit (2), wenigstens einer zweiten Recheneinheit (5) und einer Prozeßschnittstelle (3), wobei über die Prozeßschnittstelle (3) wenigstens eine Zustandsgröße ($\underline{x}_p$) eines physikalischen Prozesses (4) von dem Simulator erfaßbar ist und wenigstens eine Ausgangsgröße ($\underline{y}$) zur Beeinflussung des physikalischen Prozesses (4) von dem Simulator ausgebbar ist, wobei der Simulator so eingerichtet ist, daß mit ihm eines der Verfahren gemäß einem der Ansprüche 1 bis 7 ausgeführt werden kann.

## Claims

1. Method for real-time calculation of state variables ($x_M$) of a process model on a process computer (1) having a first calculating unit (2) and a process interface (3), wherein the process computer (1) is designed in such a manner that at least one state variable ($\underline{x}_P$) of a physical process (4) can be received by the process computer (1) via the process interface (3) and/or at least one output variable ($\underline{y}$) can be issued by the process computer (1) for controlling the physical process (4), wherein the process model is calculated with an explicit integration method by the first calculating unit (2) for determining the state variables ($\underline{x}_{M,e}$) of the process model **characterized in, that** at least a second calculating unit (5) is provided, the process model is carried out with the second calculating unit (5) using an implicit integration method essentially simultaneously with the calculation of the process model with the first calculating unit (2), the state variables ($\underline{x}_{M,i}$) of the process model calculated with the second calculating unit (5) and the implicit method are used as a basis for correcting the calculations of the process model carried out on the first calculating unit (2) in that the previous state variables ($\underline{x}_{M,i}$) of the process model calculated by the second calculating unit (5) - insofar as they exist - are used for calculating the current state variables ($x_{M,e}$) of the process model and the state variables ($\underline{x}_{M,e}$) of the process model determined in this manner with the explicit integration method are used as state variables ($x_M$) of the process model, so that the explicit integration method - insofar as possible - is operated with the more exact data of the implicit integration method.

2. Method for real-time calculation of state variables ($\underline{x}_M$) of a process model on a process computer (1) having a first calculating unit (2) and a process interface (3), wherein the process computer (1) is designed in such a manner that at least one state variable ($\underline{x}_P$) of a physical process (4) can be received by the process computer (1) via the process interface (3) and/or at least one output variable ($\underline{y}$) can be issued by the process computer (1) for controlling the physical process (4), wherein the process model is calculated with an explicit integration method by the first calculating unit (2) for determining the state variables ($\underline{x}_{M,e}$) of the process model

**characterized in,**

**that** at least a second calculating unit (5) is provided, the process model is carried out with the second calculating unit (5) using an implicit integration method essentially simultaneously with the calculation of the process model with the first calculating unit (2), that the state variables ($\underline{x}_{M,i}$) calculated with the second calculating unit and the implicit method are used as state variables ($x_M$) of the process model, insofar as the state variables ($\underline{x}_{M,i}$) calculated with the second calculating unit and the implicit method exist in real time and otherwise, the state variables ($\underline{x}_{M,e}$) calculated with the explicit integration method are used as the state variables ($\underline{x}_M$) of the process model.

3. Method according to claim 1 or 2, **characterized in that** the implicit integration method implemented on the second calculating unit (5) - at least partially - works with a larger sample step size than the explicit integration method implemented on the first calculating unit (2), in particular with a variable sample step size.

4. Method according to claim 3, **characterized in that** state variables ($\underline{x}_{M,i}$) lying between two calculated sample points are calculated on the second calculating unit (5) using interpolation, in particular using a polynomial approximation function of the process model or parts of the process model, in particular using a dense output method.

5. Method according to any one of claims 1 to 4, **characterized in that** on the second calculating unit (5), a - prospective - state variable $\left( \underline{x}_P^{k+1} \right)$ of the physical process required for calculating the prospective state variables $\left( \underline{x}_{M,i}^{k+1} \right)$ of the process model is obtained using extrapolation from the previous state variables of the physical process.

6. Method according to any one of claims 1 to 5, **characterized in that** should the first calculating unit (2) and the second calculating unit (5) terminate behind schedule, in order to calculate the state variables ($\underline{x}_M$) of the process model, these state variables ($x_M$) are calculated by extrapolation using the previous values of the determined state variables ($\underline{x}_M$) of the process model.

7. Method according to any one of claims 1 to 6, **characterized in that** the process model is parallelized on the second calculating unit (5) and at least one further, third calculating unit for processing with the implicit integration method and the state variables ($\underline{x}_{M,i}$) of the process model are calculated on the parallelized second and at least another third calculating unit.

8. Simulator, in particular an in-the-loop simulator for real-time calculation of state variables ($\underline{x}_M$) of a process model having a first calculating unit (2), at least a second calculating unit (5) and a process interface (3), wherein at least one state variable ($\underline{x}_P$) of a physical process (4) can be recorded by the simulator using the process interface (3) and at least one output variable (y) can be issued from the simulator for controlling the physical process (4), wherein the simulator is designed in such a manner, that a method according to any one of claims 1 to 7 can be carried out with it.

**Revendications**

1. Procédé destiné au calcul en temps réel des variables d'état ($\underline{X}_M$) d'un modèle de processus au moyen d'un calculateur de processus (1) avec une première unité de calcul (2) et une interface de processus (3), le calculateur de processus (1) étant réalisé de sorte que le calculateur de processus (1) puisse enregistrer par l'intermédiaire de l'interface de processus (3), au moins une variable d'état ($\underline{X}_P$) d'un processus physique (4), et/ou que le calculateur de processus (1) puisse émettre au moins une variable de sortie ($\underline{y}$) pour influencer le processus physique (4), le modèle de processus étant calculé avec un procédé d'intégration explicite par la première unité de calcul (2) pour déterminer les variables d'état ($\underline{X}_{M,e}$) du modèle de processus,

**caractérisé en ce qu'**on dispose d'au moins une deuxième unité de calcul (5), cette deuxième unité de calcul (5) au moins exécutant le modèle de processus avec un procédé d'intégration implicite, pour l'essentiel simultanément au calcul du modèle de processus par la première unité de calcul (2), les variables d'état ($\underline{X}_{M,i}$) du modèle de processus calculées par la deuxième unité de calcul (5) et le procédé implicite pour la correction du calcul du modèle de processus exécuté sur la première unité de calcul (2) étant invoquées **en ce qu'**on utilise les variables d'état ($\underline{X}_{M,i}$) passées du modèle de processus calculées par la deuxième unité de calcul (5), dans la mesure où elles sont disponibles, pour le calcul des variables d'état courantes ($\underline{X}_{M,c}$) du modèle de processus par la première unité de calcul (2), et on utilise les variables d'état ($\underline{X}_{M',e}$) du modèle de processus ainsi déterminées avec le procédé d'intégration explicite comme variables d'état ($\underline{X}_M$) du modèle de processus de telle sorte que le procédé d'intégration explicite est mis en oeuvre dans la mesure du possible avec les données plus exactes du procédé d'intégration implicite.

2. Procédé destiné au calcul en temps réel des variables d'état ($\underline{X}_M$) d'un modèle de processus au moyen d'un calculateur de processus (1) avec une unité de calcul (2) et une interface de processus (3), le calculateur de processus (1) étant réalisé de sorte que le calculateur de processus (1) puisse enregistrer par l'intermédiaire de l'interface de processus (3), au moins une variable d'état ($\underline{X}_p$) d'un processus physique (4), et/ou que le calculateur de processus (1) puisse émettre au moins une variable de sortie ($\underline{y}$) pour influencer le processus physique (4), le modèle de processus étant calculé avec un procédé d'intégration explicite par la première unité de calcul (2) pour déterminer les variables d'état ($\underline{X}_{M,e}$) du modèle de processus,
**caractérisé en ce qu'**on dispose d'au moins une deuxième unité de calcul (5), cette deuxième unité de calcul (5) au moins calculant le modèle de processus avec un procédé d'intégration implicite, pour l'essentiel simultanément au calcul du modèle de processus par la première unité de calcul (2), **en ce que** les variables d'état ($\underline{X}_{M,i}$) du modèle de processus calculées par la deuxième unité de calcul (5) et le procédé implicite sont utilisées comme variables d'état ($\underline{X}_M$) du modèle de processus dans la mesure où les variables d'état ($\underline{X}_{M,i}$) du modèle de processus calculées par la deuxième unité de calcul (5) et le procédé implicite existent en temps réel et dans le cas contraire, on utilise les variables d'état ($\underline{X}_{M,e}$) du modèle de processus déterminées avec le procédé d'intégration explicite comme variables d'état ($\underline{X}_M$) du modèle de processus.

3. Procédé selon la revendication 1 ou 2, **caractérisé en ce que** le procédé d'intégration implicite implémenté sur la deuxième unité de calcul (5) fonctionne au moins partiellement avec une largeur du pas d'analyse plus grande que celle du procédé d'intégration explicite implémenté sur la première unité de calcul (2), notamment avec une largeur variable du pas d'analyse.

4. Procédé selon la revendication 3, **caractérisé en ce que** des variables d'état ($\underline{X}_{M,i}$) du modèle de processus, situées entre deux moments d'analyse calculés, sont calculés par interpolation sur la deuxième unité de calcul (5), notamment au moyen d'une fonction d'approximation polynomiale du modèle de processus ou de parties du modèle de processus, notamment au moyen d'un procédé de Dense-Output.

5. Procédé selon une des revendications 1 à 4, **caractérisé en ce qu'**on obtient une variable d'état ($\underline{X}p^{k+1}$) future du processus physique nécessaire au calcul de la variable d'état ($\underline{X}_{M,i}^{k+1}$) future du modèle de processus, par extrapolation sur la deuxième unité de calcul (5) à partir des variables d'état passées du processus physique.

6. Procédé selon une des revendications 1 à 5, **caractérisé en ce qu'**on calcule les variables d'état ($\underline{X}_M$) du modèle de processus par extrapolation à partir des valeurs déterminées précédentes des variables d'état ($\underline{X}_M$) du modèle de processus dans le cas d'une fin retardée du calcul des variables d'état ($\underline{X}_M$) du modèle de processus de la première unité de calcul (2) et de la deuxième unité de calcul (5).

7. Procédé selon une des revendications 1 à 6, **caractérisé en ce qu'**on parallélise le modèle de processus pour le traitement avec le procédé d'intégration implicite sur la deuxième unité de calcul (5) et sur au moins une autre troisième unité de calcul et qu'on calcule en parallèle l'ensemble des variables d'état ($\underline{X}_{M,i}$) du modèle de processus sur la deuxième unité de calcul et sur au moins une troisième unité de calcul supplémentaire avec le procédé d'intégration implicite.

8. Simulateur, notamment simulateur in-the-loop destiné au calcul en temps réel des variables d'état ($\underline{X}_M$) d'un modèle de processus avec une première unité de calcul (2), au moins une deuxième unité de calcul (5) et une interface de processus (3), le simulateur pouvant enregistrer au moins une variable d'état ($\underline{X}_P$) d'un processus physique (4) par l'intermédiaire de l'interface de processus (3) et le simulateur pouvant émettre au moins une variable de sortie ($\underline{y}$) pour influencer le processus physique (4), le simulateur étant réalisé de manière à pouvoir exécuter avec lui, un des procédés selon une des revendications 1 à 7.

Fig. 1

Fig. 2

EP 2 128 726 B1

Fig. 3

13

$\underline{x}_{M,i,k-2}$  $\underline{x}_{M,i,k-1}$  $\underline{x}_{M,i,k}$  $\underline{x}_{M,i,k+1}$  $\underline{x}_{M,i,k+2}$

5 →

t

$\underline{\tilde{x}}_{p,k-2}$  $\underline{\bar{x}}_{p,k-1}$  $\underline{x}_{p,k-1}$  $\underline{x}_{p,k}$  $\underline{x}_{p,k+1}$  $\underline{x}_{p,k+2}$

t

k-2  k-1  k  k+1  k+2

$\underline{x}_{p,k-1}$  $\underline{\tilde{x}}_{p,k}$  $\underline{\tilde{x}}_{p,k+1}$  $\underline{\tilde{x}}_{p,k+2}$

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **H. Tummescheit.** *Hardware-in-the-Loop Simulation & Analysis,* November 2003

- **A. Schiela ; H. Olsson.** Mixed-mode Integration for Real-Time Simulation. *Modelica Workshop 2000 Proceedings,* 24. Oktober 2000, 69-75